# EUROPÄISCHE PATENTSCHRIFT

(11) **EP 3 999 726 B1**
(45) Veröffentlichungstag und Bekanntmachung des Hinweises auf die Patenterteilung: **09.10.2024**
(21) Anmeldenummer: 20743107.3
(22) Anmeldetag: 15.07.2020
(51) Int. Cl.: F01N 3/10, F01N 3/20, F01N 3/28, F01N 3/30, F01N 3/36, F01N 5/02

(54) **VORRICHTUNG UND VERFAHREN FÜR DIE ABGASNACHBEHANDLUNG SOWIE DEREN VERWENDUNG**
APPARATUS AND METHOD FOR THE EXHAUST GAS AFTERTREATMENT AND ITS USE
DISPOSITIF ET PROCÉDÉ DU POST-TRAITEMENT DES GAZ D'ÉCHAPPEMENT ET SON UTILISATION

(30) Priorität: 15.07.2019 DE 102019210413
(43) Veröffentlichungstag der Anmeldung: 25.05.2022
(73) Patentinhaber: Fraunhofer-Gesellschaft zur Förderung der angewandten Forschung e.V., 80686 München (DE)
(72) Erfinder: SZOLAK, Robert, 79110 Freiburg (DE); SUSDORF, Alexander, 79110 Freiburg (DE); RÜMMELE, Florian, 79110 Freiburg (DE)
(74) Vertreter: Friese Goeden Patentanwälte PartGmbB
(86) Internationale Anmeldenummer: PCT/EP2020/070017
(87) Internationale Veröffentlichungsnummer: WO 2021/009240

(56) Entgegenhaltungen:
- EP-A1- 2 368 024
- EP-A1- 2 388 451
- EP-A1- 2 570 625
- EP-B1- 2 368 024
- US-A1- 2011 061 374

## Beschreibung

Die Erfindung betrifft ein Verfahren zur Abgasnachbehandlung einer Brennkraftmaschine, die Verwendung eines katalytischen Verdampfers in einem solchen Verfahren, eine Vorrichtung für die Abgasnachbehandlung, die insbesondere dazu angepasst ist, das erfindungsgemäße Verfahren durchzuführen, und die Verwendung dieser Vorrichtung zur Abgasnachbehandlung.

Abgasnachbehandlung ist die Bezeichnung für Verfahren, bei denen die Verbrennungsgase, nachdem sie den Brennraum oder die Brennkammer einer Brennkraftmaschine verlassen haben, auf mechanischem, katalytischem oder chemischem Weg gereinigt werden. Für die Reduktion von Stickoxiden (NOx) mit der selektiven katalytischen Reduktionstechnologie (Selective Catalytic Reduction, SCR) werden Katalysatoren und Reduktionsmittel, beispielsweise Ammoniak, eingesetzt. Eingespritzt wird dazu eine wässrige Harnstofflösung, aus der im weiteren Verlauf des Transports durch das Abgasrohr durch Thermolyse und Hydrolyse Ammoniak entsteht. Für die Reduktion von Kohlenwasserstoffen und Kohlenmonoxid können Dreiwegekatalysatoren eingesetzt werden.

Die Effektivität einer katalytischen Abgasnachbehandlung, d.h. die Umwandlungs- oder Konvertierungsrate, hängt neben anderen Faktoren entscheidend von der Betriebstemperatur ab. Unterhalb von ca. 250°C finden praktisch keine Reaktionen statt. Dies ist der Grund dafür, dass auch moderne Fahrzeuge nach dem Kaltstart hohe Schadstoffemissionen aufweisen. Der Katalysator ist in diesem Betriebszuständen noch nicht betriebswarm und wandelt die emittierten Schadstoffe somit nur unzureichend um.

Es gibt einige Strategien, die Abgastemperatur schnell anzuheben. Beispielsweise kann der Katalysator motornah im Abgasstrang plaziert werden. Dadurch ist aber zumindest bei Ottomotoren die Gefahr gegeben, dass in anderen Betriebszuständen, beispielsweise in der Nähe der Nennleistung, die Temperaturen zu hoch werden. Denn Temperaturen von 1000°C zerstören den Katalysator. Gute Umsetzungsraten und eine lange Lebensdauer sind bei 400°C bis 800°C gegeben. Alternativ kann die Abgastemperatur durch elektrische Heizeinrichtungen oder durch Nacheinspritzungen sowohl innermotorisch und/oder im Abgasstrang angehoben werden. Die Publikationen EP 2 388 451 A1 oder US 2011/061374 A1 offenbaren katalytische Verdampfer in Abgasnachbehandlungssystemen mit selektiver katalytischer Reduktion.

Diese Maßnahmen haben jedoch die Wirkung, dass der Verbrauch nach dem Kaltstart weiter ansteigt und zusätzliche Emissionen erzeugt werden.

Ausgehend vom Stand der Technik liegt der Erfindung somit die Aufgabe zugrunde, eine Abgasnachbehandlung ggf. einschließlich selektiver katalytischer Reduktion bereitzustellen, die eine katalytische Umwandlung bei niedrigeren Temperaturen ermöglicht.

Die Aufgabe wird erfindungsgemäß gelöst durch ein Verfahren zur Abgasnachbehandlung nach Anspruch 1, eine Verwendung nach Anspruch 8, eine Verwendung nach Anspruch 15 und eine Vorrichtung nach Anspruch 9. Vorteilhafte Weiterbildungen der Erfindung finden sich in den Unteransprüchen. Erfindungsgemäß wird ein Verfahren zur Abgasnachbehandlung, insbesondere zur Entfernung von Stickoxiden, vorgeschlagen, das im unabhängigen Anspruch 1 definiert ist.

Durch das Verdampfen des Kraftstoffes in Schritt c) wird die Zusammensetzung des Kraftstoffes verändert. Es werden insbesondere H₂ und/oder CO und/oder Kohlenwasserstoffe, z.B. kurzkettige Kohlenwasserstoffe mit 1 bis 10 C-Atomen erzeugt, wobei in einigen Ausführungsformen der Erfindung die Komponenten mit 1 - 5 Kohlenstoffatomen den wesentlichen Anteil (> 66%) ausmachen.

Günstigerweise wird in Schritt e) die Wärme der katalytischen Verdampfung zur Verdampfung und Umsetzung (Thermolyse und Hydrolyse) von Harnstoff genutzt. Der Einsatz des Verfahrens erfolgt dann, wenn das Abgas Stickoxide enthält. Insofern wird ein geregeltes System ins Auge gefasst. In den Motorkennfeldpunkten in denen das Abgas vermehrt Stickoxide enthält, wird es zugeschaltet. In anderen Motorkennfeldpunkten in denen durch die Verbrennung wenige oder tolerable Stickoxid-Mengen entstehen, ist das System nicht aktiv. Ist es nicht aktiv, wird die Zuleitung für Luft und Abgas gestoppt.

Das stickoxidhaltige Rohabgas kann ein unbehandeltes Rohabgas sein. Es kann auch ein behandeltes Rohabgas sein, das z.B. mit einem Partikelfilter und/oder Dieseloxidationskatalysator behandelt ist.

Die Schritte b) und c) können gleichzeitig ausgeführt werden. Im Schritt e) kann das Zuführen des Gemisches direkt in das Abgasnachbehandlungssystem erfolgen oder indem es in die Abgasleitung eingeleitet wird, die vom Motor zum Abgasnachbehandlungssystem führt.

Auf Basis der katalytischen Verdampfungstechnologie, die an sich bekannt ist, wurde das erfindungsgemäße Verfahren entwickelt, bei dem stickoxidhaltiges Rohabgas eines Motors, flüssiger Kraftstoff und eine Harnstofflösung eingesetzt werden. Durch die katalytische Umwandlung des Kraftstoffs im katalytischen Verdampfer wird innerhalb des Systems Wärme erzeugt. Auf diese Weise wird das System wesentlich unabhängiger vom Betrieb des Motors. Es wird somit möglich, losgelöst vom Motorbetrieb, insbesondere von Abgastemperatur und Abgasmassenstrom, Reduktionsmittel aus der wässrigen Harnstofflösung herzustellen. Zudem werden im erfindungsgemäßen Verfahren aus dem zugegebenen Kraftstoff Wasserstoff und Kohlenwasserstoffe, beispielsweise Ethen, erzeugt, die dem SCR-System der AGN als zusätzliches Reaktionsmittel, d.h. Reduktionsmittel, dienen.

Die zugeführten Mengen an Harnstofflösung und Kraftstoff sind die üblichen Mengen, wie sie bei der an sich bekannten Betriebsweise von katalytischen Verdampfern verwendet werden.

Das dem katalytischen Verdampfer zugesetzte stickoxidhaltige Rohabgas kann ein Teil der üblichen Motorabgase sein, d.h. vom Abgasstrom des Motors kann ein Teil abgezweigt und im Schritt a) als stickoxidhaltiges Rohabgas bereitgestellt werden, das in den katalytischen Verdampfer eingeleitet wird. Eine solche Aufteilung kann durch Klappen oder Schieber in der Abgasleitung erfolgen, die entsprechend angesteuert werden können. Das Rohabgas kann auch direkt vom Motor abgeleitet und dem katalytischen Verdampfer zugeführt werden.

Mit dem erfindungsgemäßen Verfahren wird vorteilhafterweise erreicht, dass im Gegensatz zur Aufheizung des Gesamtabgasstromes gemäß dem Stand der Technik lediglich ein kleiner Teilstrom des stickoxidhaltigen Rohabgases aufgeheizt werden muss. Durch die Umwandlung des Kraftstoffs wird zudem weitere Wärme erzeugt, die nicht elektrisch eingebracht werden muss. Für eine katalytische Umwandlung ist lediglich der Katalysator aufzuheizen. Die Reaktionen können über die Variation der Eduktströme geregelt werden.

Im erfindungsgemäßen Verfahren können katalytische Verdampfer eingesetzt werden, wie sie aus dem Stand der Technik an sich bekannt sind. Der Fachmann weiß auch, wie sie prinzipiell betrieben werden können. Ein Beispiel eines im erfindungsgemäßen Verfahren einsetzbaren katalytischen Verdampfers ist in der DE 10 2015 120 106 A1 beschrieben, auf die hinsichtlich der konstruktiven Details und der Betriebsweise im vollen Umfang verwiesen wird.

Der im erfindungsgemäßen Verfahren eingesetzte katalytische Verdampfer kann einen Katalysator aufweisen, der beispielsweise auf einen Träger aufgebracht sein kann. Der Träger mit dem Katalysator kann in ein Reaktionsgefäß so eingebracht sein, dass zwischen der inneren Oberfläche des Reaktionsgefäßes und der Katalysatoroberfläche ein Zwischenraum gebildet ist.

Beim Betrieb eines katalytischen Verdampfers kann beispielsweise der flüssige Brennstoff auf die Innenseite der Reaktorwand eines katalytischen Verdampfers zugegeben werden, während ein Oxidationsmittel, z.B. Luft, katalysatorseitig zugeführt wird. Ein geringer Teil des Brennstoffs oxidiert am Katalysator und die dabei erzeugte Wärme wird zur vollständigen Verdampfung des Brennstoffs genutzt. Die Wärmeübertragung erfolgt überwiegend durch die Wärmestrahlung von der heißen Katalysatoroberfläche auf die Oberfläche des Brennstoffs. Die Reaktorwand, auf die der Brennstoff aufgegeben wird, ist dabei kälter als der Brennstoff selbst. Es entstehen keinerlei Ablagerungen oder Verkrustungen.

Das in Schritt a) zugeführte stickoxidhaltige Rohabgas kann Restsauerstoff enthalten. Falls die Konzentration an Restsauerstoff im Rohabgas ausreichend ist, kann dies als Oxidationsmittel zum Betrieb des katalytischen Verdampfers ausreichend sein. Sollte die Konzentration an Restsauerstoff im stickoxidhaltigen Rohabgas zu niedrig sein, dann kann in einer Ausführungsform weiterhin in Schritt c) ein Oxidationsmittel in den katalytischen Verdampfer eingeleitet werden. Bei diesem Oxidationsmittel handelt es sich um ein zusätzliches Oxidationsmittel zum Restsauerstoff im Rohabgas. Ein solches Oxidationsmittel kann Sauerstoff oder ein sauerstoffhaltiges Medium, insbesondere Luft, sein. Die Menge des Oxidationsmittels kann dabei so gewählt werden, dass die üblichen Mengen von Oxidationsmittel in einem katalytischen Verdampfer erreicht werden. Die Luft kann aus der Umgebung kommen und gegebenenfalls durch einen Turbolader aufgeladen sein.

Das nach Schritt d) gebildete Gemisch kann als Reduktionsmittel Wasserstoff (H₂) aufweisen. Ferner kann das Gemisch zusätzlich noch NH₃, CO, Kohlenwasserstoffe, beispielsweise Ethen, und Mischungen dieser aufweisen.

Durch die Veränderung der Eduktströme Kraftstoff, Harnstofflösung, stickstoffhaltiges Rohabgas und gegebenenfalls Oxidationsmittel kann je nach Betriebspunkt im Motorkennfeld ein individuelles Reduktionsmittel bereitgestellt werden. Die Bereitstellung dieses Reduktionsmittels im erfindungsgemäßen Verfahren steigert die Aktivität des SCR-Systems und somit die Reduktion von Stickoxiden im Motorenabgas. Besonders wirksam ist der Vorteil beim Kaltstart und anderen Betriebspunkten mit kaltem Abgasnachbehandlungssystem.

In einer Ausführungsform kann das Abgasnachbehandlungssystem eine Vorrichtung zur Thermolyse und Hydrolyse, wie einen Hydrolysekatalysator, und eine Vorrichtung zur selektiven katalytischen Reduktion (SCR)umfassen. Solche Vorrichtungen sind an sich bekannt, so dass der Fachmann weiß, wie sie aufgebaut sind und wie sie betrieben werden können. Für das erfindungsgemäße Verfahren hat es sich als vorteilhaft herausgestellt, die Vorrichtung zur Thermolyse und Hydrolyse sowie die Vorrichtung zur SCR in voneinander getrennten Gehäusen zu verbauen. Auf diese Weise ist es möglich, diese Vorrichtungen, insbesondere die Vorrichtung zur Hydrolyse, an besonders geeigneten Stellen im erfindungsgemäßen Verfahren einzusetzen. Die Vorrichtung zur Thermolyse und Hydrolyse (Hydrolysekatalysator) kann sich im Abgasteilstrom oder im Hauptabgasstrom befinden.

In einigen Ausführungsformen kann der Harnstoff in Form einer Harnstofflösung eingesetzt werden, beispielsweise eine wässrige Harnstofflösung, insbesondere eine 32,5 prozentige Harnstofflösung. Diese hat sich als besonders geeignet für Abgasnachbehandlungssysteme herausgestellt.

In einer Ausführungsform kann das Mischen der Harnstofflösung mit dem verdampften Kraftstoff vor oder im Abgasstrang erfolgen. Im erfindungsgemäßen Verfahren wird das Gemisch aus Schritt d) in ein Abgasnachbehandlungssystem eingebracht. Dies kann dadurch erfolgen, dass dieses Gemisch in den Abgasstrang, der den Motor mit dem Abgasnachbehandlungssystem verbindet, eingeleitet wird. Das Mischen der Harnstofflösung, die ggf. verdampft sein kann, mit dem verdampften Kraftstoff kann durchgeführt werden, bevor die Zufuhr in den Abgasstrang erfolgt, und/oder im Abgasstrang.

Erfindungsgemäß wird das Gemisch aus Schritt d) zuerst der Vorrichtung zur Hydrolyse und das daraus erhaltene Produkt nachfolgend der Vorrichtung zur SCR zugeführt werden.

In einer weiteren Ausführungsform kann die Abgasnachbehandlung, gegebenenfalls einschließlich der selektiven katalytischen Reduktion, bei einer Temperatur von bereits etwa 170°C oder etwa 180°C oder etwa 190°C oder etwa 200°C betrieben werden. Dies bedeutet also, dass mit dem erfindungsgemäßen Verfahren Abgasnachbehandlungen bereits bei deutlich niedrigeren Temperaturen als nach dem Stand der Technik bekannt anspringen und durchgeführt werden können. Das erfindungsgemäße Verfahren kann zur Umwandlung von Stickoxiden für SCR-Systeme jeglicher Art von Verbrennungskraftmaschinen, die mit einem SCR-System zur Reduktion von NOx-Emissionen arbeiten, eingesetzt werden.

Gegenstand der Erfindung ist ferner die Verwendung eines katalytischen Verdampfers, wie er vorliegend ausführlich beschrieben wird, in einem erfindungsgemäßen Verfahren, wie es ebenfalls vorstehend im Detail beschrieben wurde.

Ferner wird ein Reduktionsmittel bereitgestellt, das nach dem erfindungsgemäßen Verfahren erhältlich ist. Hinsichtlich der Herstellungsweise und der Zusammensetzung wird auf vorstehende Ausführungen verwiesen. Insbesondere weist das Reduktionsmittel Wasserstoff, Kohlenwasserstoffe, insbesondere Ethen, Ammoniak und/oder Kohlenmonoxid auf. Weiterhin wird eine Vorrichtung für die Abgasnachbehandlung z.B. einschließlich SCR beschrieben, die im unabhängigen Anspruch 8 definiert ist.

Durch die vorstehend verwendeten Begriffe "dazu angepasst ist" wird darauf hingewiesen, dass die entsprechenden Leitungen so ausgelegt sind, dass die darin zuzuführenden Materialien ohne negative Auswirkungen geleitet werden können, d.h. dass sie beispielsweise gegenüber den zu leitenden Materialien inert sind. Ferner weist der Begriff "dazu angepasst ist" auch darauf hin, dass die entsprechenden Leitungen mit Reservoirs verbunden sind, die die zuzuführenden Materialien aufweisen.

Die erfindungsgemäße Vorrichtung ist insbesondere zur Durchführung des vorstehend beschriebenen erfindungsgemäßen Verfahrens geeignet. Somit ergeben sich konstruktive Details und die Funktionsweise der Vorrichtung auch aus den vorstehenden Darstellungen des erfindungsgemäßen Verfahrens ergibt.

In einer Ausführungsform umfasst das Abgasnachbehandlungssystem eine Vorrichtung zur Hydrolyse sowie eine Vorrichtung für eine an sich bekannte selektive katalytische Reduktion. Eine Vorrichtung für die Hydrolyse kann beispielsweise einen Hydrolysekatalysator umfassen. Eine Vorrichtung zur selektiven katalytischen Reduktion kann beispielsweise einen Katalysator für die selektive katalytische Reduktion aufweisen. Dabei können die Vorrichtung für die Hydrolyse und die Vorrichtung für die selektive katalytische Reduktion in voneinander verschiedenen Gehäusen vorgesehen sein. Dies ermöglicht es, diese Vorrichtungen unabhängig voneinander an verschiedenen Stellen der erfindungsgemäßen Vorrichtung zu verbauen, aber dennoch eine zusammenhängende Abgasbehandlung durchzuführen. Die Vorrichtung zur Hydrolyse kann sich im Abgasteilstrom oder im Hauptabgasstrom befinden.

In einer Ausführungsform kann die erfindungsgemäße Vorrichtung weiterhin einen Harnstoffverdampfer umfassen, der dazu angepasst ist, die Harnstofflösung zu verdampfen, bevor sie mit dem verdampften Kraftstoff gemischt wird. Vorteil der Verdampfung von Harnstofflösung und katalytischer Kraftstoffverdampfung ist die Funktionstrennung. So kann auf den Stand der Technik der Harnstoffverdampfung zurückgegriffen werden. Diese müssen nicht aufeinander abgestimmt werden und dennoch entsteht ein verbessertes Reduktionsmittel mit NH₃ (aus Harnstoff), H₂/CO/Ethen (aus dem Kraftstoff).

In einer Ausführungsform kann der Raum zum Mischen die Ableitung und/oder der Abgasstrang sein.

In einer Ausführungsform der erfindungsgemäßen Vorrichtung kann diese weiterhin eine Oxidationsmittelzuleitung zum katalytischen Verdampfer aufweisen, die dazu angepasst ist, Oxidationsmittel in den katalytischen Verdampfer einzuleiten. Eine solche Zufuhr von Oxidationsmittel, beispielsweise Sauerstoff oder Luft, kann dann erforderlich werden, wenn das Rohabgas nicht die notwendige Konzentration an Restsauerstoff aufweist.

Ferner ist Gegenstand der Erfindung die Verwendung der Vorrichtung, wie sie vorstehend beschrieben wurde, zur Abgasnachbehandlung, einschließlich einer selektiven katalytischen Reduktion.

Mit der vorstehend beschriebenen Vorrichtung können in einfacher und günstiger Weise die durch das erfindungsgemäße Verfahren erreichten Vorteile erzielt werden.

Nachfolgend soll die Erfindung anhand von Figuren ohne Beschränkung des allgemeinen Erfindungsgedankens näher erläutert werden. Dabei ist
- Figur 1a,b: eine schematische Darstellung einer Ausführungsform einer Vorrichtung zur Abgasnachbehandlung.
- Figur 2: zeigt eine Ansicht eines beispielhaft einsetzbaren katalytischen Verdampfers.
- Figur 3: zeigt das Prinzip der Wirkungsweise des katalytischen Verdampfers von Figur 2.

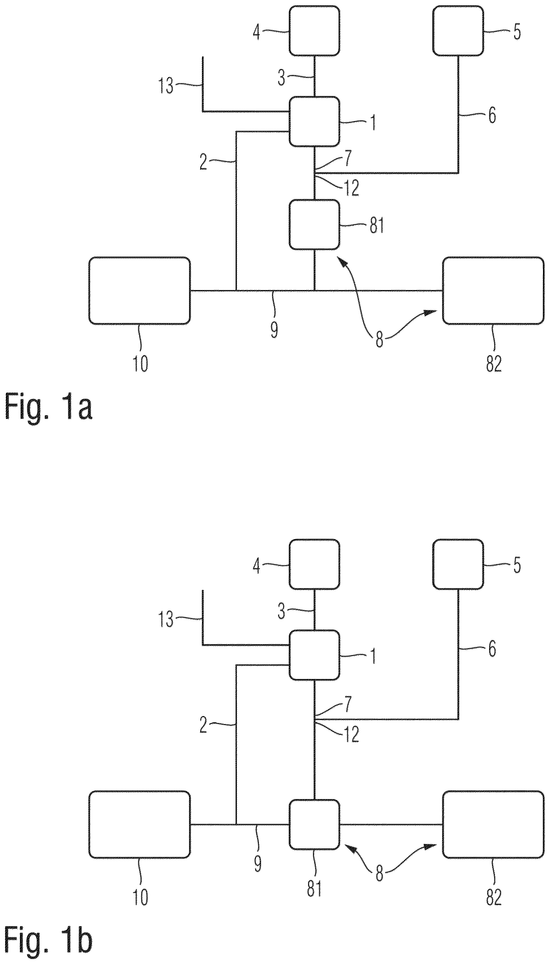

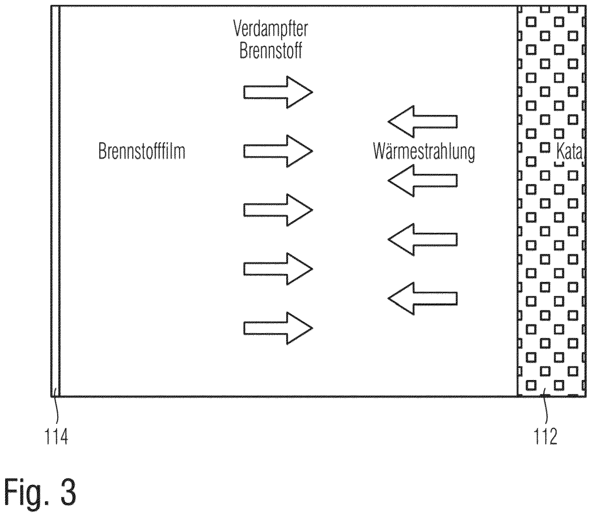

In Figur 1a ist schematisch eine Vorrichtung mit einem katalytischen Verdampfer 1, der in den nachfolgenden Figuren 3 und 4 näher erläutert wird, zur Abgasnachbehandlung gezeigt. Ein Motor 10, z.B. ein Dieselmotor, wird in üblicher Weise zum Betrieb eines Kraftfahrzeuges eingesetzt, wobei eine Kraftstoffzufuhr und eine Luftzufuhr zum Motor erfolgt. Die entstandenen stickoxidhaltigen Rohabgase werden durch einen Abgasstrang 9 aus dem Motor 10 abgeleitet. Diese stickoxidhaltigen Rohabgase aus dem Motor 10 werden einer Vorrichtung zur Abgasnachbehandlung 8 zugeführt. Die Abgasnachbehandlung 8 weist eine Vorrichtung zur Hydrolyse 81, beispielsweise einen Hydrolysekatalysator, und eine Vorrichtung zur selektiven katalytischen Reduktion 82 auf. Die Vorrichtung zur Hydrolyse 81 und die Vorrichtung zur selektiven katalytischen Reduktion liegen in getrennten Gehäusen vor. Zumindest ein Teil des stickoxidhaltigen Rohabgases wird über die Rohabgaszuleitung 2 vorm Abgasstrang 9 abgezweigt und dem katalytischen Verdampfer 1 zugeführt. Von einem Kraftstoffreservoir 4 wird über eine Kraftstoffzuleitung 3 dem katalytischen Verdampfer 1 Kraftstoff zugeführt. Über eine Oxidationsmittelzuleitung 13 kann dem katalytischen Verdampfer 1 ggf. ein Oxidationsmittel zugeführt werden, beispielsweise Luft. Der im katalytischen Verdampfer 1 verdampfte Kraftstoff wird über die Ableitung 7 aus dem katalytischen Verdampfer 1 ausgeleitet. Aus dem Harnstoffreservoir 5 wird über eine Harnstoffzuleitung 6 die Harnstofflösung in die Ableitung 7 eingeleitet. Die Ableitung 7 fungiert als Raum zum Mischen 12 von verdampftem Kraftstoff und Harnstoff. Die Vorrichtung zur Hydrolyse 81, die Teil des Abgasnachbehandlungssystems 8 ist, befindet sich getrennt von der Vorrichtung zur SCR 82. Die Vorrichtung zur Hydrolyse 81 befindet sich nach dem Raum zum Mischen 12 und vor dem Abgasstrang 9, wohingegen die Vorrichtung zur SCR 82 stromabwärts vom Abgasstrang 9 an einer Stelle vorgesehen ist, nachdem das Gemisch aus dem katalytischen Verdampfer 1 dem Abgasstrang 9 zugeführt wurde.

In Figur 1b ist eine weitere Ausführungsform der erfindungsgemäßen Vorrichtung gezeigt. Sie entspricht der in der Figur 1a dargestellten Vorrichtung, wobei die Vorrichtung zur Hydrolyse 81 sich im Abgasstrang (Hauptabgasstrom) 9 befindet.

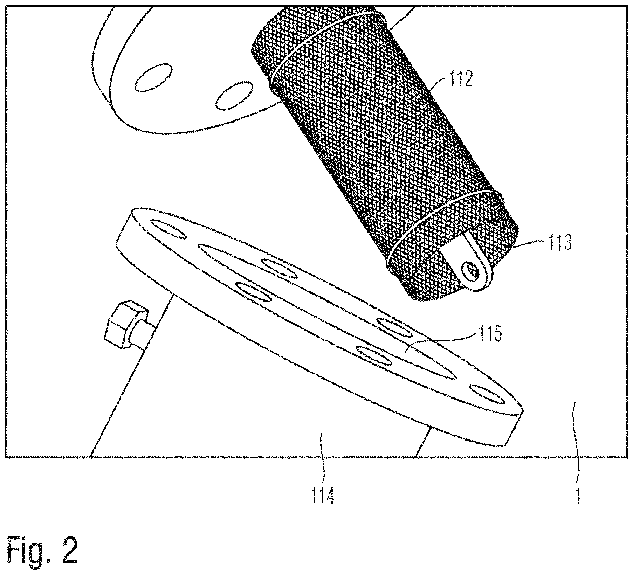

In Figur 2 ist ein katalytischer Verdampfer 1 gezeigt, wie er im erfindungsgemäßen Verfahren eingesetzt werden kann. Der katalytische Verdampfer 1 weist einen Katalysator 112 auf, der auf ein Metallnetz 113 aufgebracht ist. Als Katalysator 112 und als Metallnetz 113 können dabei solche Materialien eingesetzt werden, wie sie aus dem Stand der Technik bekannt sind. Das Metallnetz 113 mit dem Katalysator 112 kann in einem Reaktionsgefäß 114 vorliegen. In Figur 2 erfolgt aus Gründen der Übersichtlichkeit die Darstellung so, dass der Katalysator 112 mit dem Metallnetz 113 aus dem Reaktionsgefäß 114 herausgezogen dargestellt ist. Wird der Katalysator 112 mit dem Metallnetz 113 in das Reaktionsgefäß eingeschoben, dann bildet sich zwischen der inneren Oberfläche 115 des Reaktionsgefäßes 114 und der Oberfläche des Katalysators 112 auf dem Metallnetz 113 ein Zwischenraum.

Figur 3 zeigt schematisch die Betriebsweise des in Figur 2 dargestellten katalytischen Verdampfers. Der Kraftstoff wird auf die untere Oberfläche des Reaktorgefäßes 114 zugegeben, während das unbehandelte Rohabgas und gegebenenfalls ein weiteres Oxidationsmittel katalysatorseitig zugeführt werden. Ein geringer Teil des Kraftstoffs oxidiert am Katalysator 112 und die dabei erzeugte Wärme wird zur vollständigen Verdampfung des Brennstoffs genutzt. Die Wärmeübertragung erfolgt überwiegend durch Wärmestrahlung von der heißen Oberfläche des Katalysators 112 auf die Oberfläche des Brennstofffilms. Die Wand des Reaktorgefäßes 114, auf die der Brennstoff aufgegeben wird, kann dabei kälter als der Brennstoff selbst sein. So entstehen keinerlei Ablagerungen oder Verkrustungen.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche "erste" und "zweite" Merkmale definieren, so dient dies der Unterscheidung gleichartiger Merkmale ohne eine Rangfolge festzulegen.

## Patentansprüche

1. Verfahren zur Abgasnachbehandlung, enthaltend die folgenden Schritte:
a) Bereitstellen eines stickoxidhaltigen Rohabgases,
b) Einleiten des stickoxidhaltigen Rohabgases in einen katalytischen Verdampfer (1),
c) Einleiten eines Kraftstoffes in den katalytischen Verdampfer (1), wodurch ein umgewandelter Kraftstoff erhalten wird, welcher H₂ und/oder CO und/oder Kohlenwasserstoffe mit 1 bis 10 Kohlenstoffatomen enthält,
d) Mischen von Harnstoff mit dem umgewandelten Kraftstoff,
e) Zuführen des nach Schritt d) erhaltenen Gemisches in eine Vorrichtung zur Hydrolyse und
f) Zuführen des nach Schritt e) erhaltenen Produktes in ein Abgasnachbehandlungssystem (8) mit einer Vorrichtung zur selektiven katalytischen Reduktion (SCR).

2. Verfahren nach Anspruch 1, **dadurch gekennzeichnet, dass** weiterhin in Schritt c) ein Oxidationsmittel in den katalytischen Verdampfer (1) eingeleitet wird.

3. Verfahren nach einem der Ansprüche 1 oder 2, **dadurch gekennzeichnet, dass** der Harnstoff in Form einer Harnstofflösung eingesetzt wird.

4. Verfahren nach einem der Ansprüche 1 bis 3, **dadurch gekennzeichnet, dass** das Mischen des Harnstoffs mit dem verdampften Kraftstoff vor oder in einem Teil des Abgasstrangs (9) erfolgt.

5. Verfahren nach einem der Ansprüche 1 bis 4, dass das Gemisch aus Schritt d) der Vorrichtung zur Hydrolyse (81) und das danach erhaltene Produkt der Vorrichtung zur selektiven katalytischen Reduktion (82) zugeführt wird.

6. Verfahren nach einem der Ansprüche 1 bis 5, **dadurch gekennzeichnet, dass** die Abgasnachbehandlung bei einer Temperatur von etwa 170 °C oder höher betrieben wird.

7. Verfahren nach einem der Ansprüche 1 bis 6, **dadurch gekennzeichnet, dass** der umgewandelte Kraftstoff zu mehr als 66 % Kohlenwasserstoffe mit 1 bis 5 Kohlenstoffatomen enthält.

8. Vorrichtung für die Abgasnachbehandlung, enthaltend:
einen katalytischen Verdampfer (1),
eine Rohabgaszuleitung (2) zum katalytischen Verdampfer (1), die dazu angepasst ist, stickoxidhaltiges Rohabgas in den katalytischen Verdampfer (1) einzuleiten,
eine Kraftstoffzuleitung (3) zum katalytischen Verdampfer (1), die dazu angepasst ist, Kraftstoff in den katalytischen Verdampfer (1) einzuleiten,
eine Ableitung (7) aus dem katalytischen Verdampfer (1), die dazu angepasst ist, den verdampften Kraftstoff aus dem katalytischen Verdampfer (1) abzuleiten,
eine Vorrichtung zur Hydrolyse und eine Einrichtung zur selektiven katalytischen Reduktion, und
ein Abgasnachbehandlungssystem (8), wobei
der katalytische Verdampfer (1) dazu eingerichtet ist, einen umgewandelten Kraftstoff zu erzeugen, welcher H₂ und/oder CO und/oder Kohlenwasserstoffe mit 1 bis 10 Kohlenstoffatomen enthält.

9. Vorrichtung nach Anspruch 8, weiterhin enthaltend ein Harnstoffreservoir (5) und eine Harnstoffzuleitung (6), die mit einem Raum zum Mischen (12) von im katalytischen Verdampfer erhaltenen umgewandelten Kraftstoff und Harnstoff verbunden ist.

10. Vorrichtung nach Anspruch 8 oder 9, **dadurch gekennzeichnet, dass** die Vorrichtung zur Hydrolyse (81) sowie die Vorrichtung zur selektiven katalytischen Reduktion (82) in voneinander getrennten Gehäusen vorhanden sind.

11. Vorrichtung nach einem der Ansprüche 8 bis 10, **dadurch gekennzeichnet, dass** der Raum zum Mischen (12) die Ableitung (7) und/oder ein Abgasstrang (9) ist.

12. Vorrichtung nach einem der Ansprüche 8 bis 11, **dadurch gekennzeichnet, dass** sie weiterhin eine Oxidationsmittelzuleitung (13) zum katalytischen Verdampfer (1) aufweist, die dazu angepasst ist, ein Oxidationsmittel in den katalytischen Verdampfer (1) einzuleiten.

13. Verwendung einer Vorrichtung nach einem der Ansprüche 8 bis 12 zur Abgasnachbehandlung einschließlich einer selektiven katalytischen Reduktion.

## Claims

1. Method for exhaust gas post treatment, containing the following steps:
a) providing a nitrogen oxide-containing raw exhaust gas,
b) introducing the nitrogen oxide-containing raw exhaust gas into a catalytic evaporator (1),
c) introducing a fuel into the catalytic evaporator (1) so as to obtain a converted fuel which contains H₂ and/or CO and/or hydrocarbons having 1 to 10 carbon atoms,
d) mixing urea with the converted fuel,
e) supplying the mixture obtained according to step d) to a device for hydrolysis, and
f) supplying the product obtained according to step e) to an exhaust gas post treatment system (8) with a device for the selective catalytic reduction (SCR).

2. Method according to claim 1, **characterized in that** furthermore an oxidant is introduced into the catalytic evaporator (1) in step c).

3. Method according to any of claims 1 or 2, **characterized in that** the urea is used in the form of a urea solution.

4. Method according to any of claims 1 to 3, **characterized in that** the mixing of the urea with the evaporated fuel is carried out upstream or in a part of the exhaust gas system (9).

5. Method according to any of claims 1 to 4, that the mixture from step d) is supplied to the device for hydrolysis (81) and the subsequently obtained product is supplied to the device for the selective catalytic reduction (82).

6. Method according to any of claims 1 to 5, **characterized in that** the exhaust gas post treatment can be operated at a temperature of about 170°C or higher.

7. Method according to any of claims 1 to 6, **characterized in that** the converted fuel contains more than 66 % hydrocarbons having 1 to 5 carbon atoms.

8. Device for exhaust gas post treatment, containing:
a catalytic evaporator (1),
a raw exhaust gas supply line (2) to the catalytic evaporator (1),
which is adapted to introduce nitrogen oxide-containing raw exhaust gas into the catalytic evaporator (1),
a fuel supply line (3) to the catalytic evaporator (1), which is adapted to introduce fuel into the catalytic evaporator (1),
a discharge line (7) from the catalytic evaporator (1), which is adapted to discharge the evaporated fuel from the catalytic evaporator (1),
a device for hydrolysis and an apparatus for a selective catalytic reduction, and
an exhaust gas post treatment system (8), wherein
the catalytic evaporator (1) is designed to generate a converted fuel which contains H₂ and/or CO and/or hydrocarbons having 1 to 10 carbon atoms.

9. Device according to claim 8, further containing a urea reservoir (5) and a urea supply line (6), which is connected to a space for mixing (12) converted fuel obtained in the catalytic evaporator and urea.

10. Device according to claim 8 or 9, **characterized in that** the device for hydrolysis (81) and the device for selective catalytic reduction (82) are available in housings separated from one another.

11. Device according to any of claims 8 to 10, **characterized in that** the space for mixing (12) is the discharge line (7) and/or an exhaust gas system (9).

12. Device according to any of claims 8 to 11, **characterized in that** it further includes an oxidant supply line (13) to the catalytic evaporator (1), which is adapted to introduce an oxidant into the catalytic evaporator (1).

13. Use of a device according to any of claims 8 to 12 for exhaust gas post treatment including a selective catalytic reduction.

## Revendications

1. Procédé de post-traitement des gaz d'échappement, comprenant les étapes suivantes consistant à :
a) fournir des gaz d'échappement bruts contenant des oxydes d'azote,
b) introduire les gaz d'échappement bruts contenant des oxydes d'azote dans un évaporateur catalytique (1),
c) introduire un carburant dans l'évaporateur catalytique (1), ce qui permet d'obtenir un carburant converti qui contient du H₂ et/ou du CO et/ou des hydrocarbures ayant 1 à 10 atomes de carbone,
d) mélanger de l'urée avec le carburant converti,
e) amener le mélange, obtenu à l'issue de l'étape d), dans un dispositif d'hydrolyse, et
f) amener le produit, obtenu à l'issue de l'étape e), dans un système de post-traitement des gaz d'échappement (8) comprenant un dispositif de réduction catalytique sélective (SCR).

2. Procédé selon la revendication 1,
**caractérisé en ce qu'**en outre, à l'étape c), un agent oxydant est introduit dans l'évaporateur catalytique (1).

3. Procédé selon l'une des revendications 1 ou 2,
**caractérisé en ce que** l'urée est utilisée sous la forme d'une solution d'urée.

4. Procédé selon l'une des revendications 1 à 3,
**caractérisé en ce que** le mélange de l'urée avec le carburant évaporé est réalisé en amont ou dans une partie de la ligne d'échappement (9).

5. Procédé selon l'une des revendications 1 à 4,
**caractérisé en ce que** le mélange issu de l'étape d) est amené au dispositif d'hydrolyse (81) et le produit obtenu ensuite est amené au dispositif de réduction catalytique sélective (82).

6. Procédé selon l'une des revendications 1 à 5,
**caractérisé en ce que** le traitement des gaz d'échappement est effectué à une température d'environ 170 °C ou plus.

7. Procédé selon l'une des revendications 1 à 6,
**caractérisé en ce que** le carburant converti contient plus de 66 % d'hydrocarbures ayant 1 à 5 atomes de carbone.

8. Dispositif de post-traitement des gaz d'échappement, comprenant :
un évaporateur catalytique (1),
une conduite d'alimentation en gaz d'échappement bruts (2) vers l'évaporateur catalytique (1), adaptée pour introduire des gaz d'échappement bruts contenant des oxydes d'azote dans l'évaporateur catalytique (1),
une conduite d'alimentation en carburant (3) vers l'évaporateur catalytique (1), adaptée pour introduire du carburant dans l'évaporateur catalytique (1), une conduite d'évacuation (7) de l'évaporateur catalytique (1), adaptée pour évacuer le carburant évaporé de l'évaporateur catalytique (1),
un dispositif d'hydrolyse et un dispositif de réduction catalytique sélective, et
un système de post-traitement des gaz d'échappement (8),
dans lequel
l'évaporateur catalytique (1) est adapté pour produire un carburant converti qui contient du H₂ et/ou du CO et/ou des hydrocarbures ayant 1 à 10 atomes de carbone.

9. Dispositif selon la revendication 8,
comprenant en outre un réservoir d'urée (5) et une conduite d'alimentation en urée (6) reliée à un espace (12) de mélange du carburant converti, obtenu dans l'évaporateur catalytique, et de l'urée.

10. Dispositif selon la revendication 8 ou 9,
**caractérisé en ce que** le dispositif d'hydrolyse (81) ainsi que le dispositif de réduction catalytique (82) sont présents dans des enceintes séparées l'une de l'autre.

11. Dispositif selon l'une des revendications 8 à 10,
**caractérisé en ce que** l'espace de mélange (12) est la conduite d'évacuation (7) et/ou une ligne d'échappement (9).

12. Dispositif selon l'une des revendications 8 à 11,
**caractérisé en ce qu'**il comprend en outre une conduite d'alimentation en agent oxydant (13) vers l'évaporateur catalytique (1), adaptée pour introduire un agent oxydant dans l'évaporateur catalytique (1).

13. Utilisation d'un dispositif selon l'une des revendications 8 à 12 pour le post-traitement des gaz d'échappement incluant une réduction catalytique sélective.
